(19) Europäisches Patentamt / European Patent Office / Office européen des brevets

(11) **EP 2 517 080 B1**

(12) **EUROPEAN PATENT SPECIFICATION**

(45) Date of publication and mention of the grant of the patent:
**05.04.2017 Bulletin 2017/14**

(51) Int Cl.:
***G05D 1/00*** *(2006.01)*

(21) Application number: **09805978.5**

(86) International application number:
**PCT/US2009/069080**

(22) Date of filing: **21.12.2009**

(87) International publication number:
**WO 2011/078847 (30.06.2011 Gazette 2011/26)**

(54) **CALCULATION AND DISPLAY OF WARNING SPEED FOR THRUST ASYMMETRY CONTROL**

BERECHNUNG UND ANZEIGE EINER WARNUNGSGESCHWINDIGKEIT FÜR ASYMMETRISCHE SCHUBREGELUNG

CALCUL ET AFFICHAGE DE LA VITESSE LIMITE POUR UN CONTRÔLE DE LA POUSSÉE ASYMÉTRIQUE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**31.10.2012 Bulletin 2012/44**

(73) Proprietor: **The Boeing Company Chicago, IL 60606-1596 (US)**

(72) Inventors:
- **MALLOUK, Bechara J.**
  **Mukilteo**
  **Washington 98275 (US)**
- **CHEN, Sherwin S.**
  **Bellevue**
  **Washington 98008 (US)**
- **WIEDEMANN, John**
  **Bothell**
  **Washington 98124 (US)**
- **BRESLEY, William M.**
  **Sammamish**
  **Washington 98074-6548 (US)**
- **GARDNER, Kyle**
  **Seattle**
  **Washington 98117 (US)**
- **EGGOLD, David P.**
  **Everett**
  **Washington 98208 (US)**
- **HARRIGAN, Jeffery S.**
  **Snohomish**
  **Washington 98296 (US)**
- **FLANNIGAN, Sean J.**
  **Seattle**
  **Washington 98115 (US)**

(74) Representative: **Witte, Weller & Partner Patentanwälte mbB Postfach 10 54 62 70047 Stuttgart (DE)**

(56) References cited:
| | |
|---|---|
| FR-A1- 2 542 276 | US-A- 4 638 437 |
| US-A- 4 967 363 | US-A1- 2001 032 039 |
| US-A1- 2004 183 699 | US-A1- 2007 124 034 |
| US-A1- 2008 161 983 | |

- GARAY G ET AL: "F/A-18 single engine minimum control airspeed (Vmc)", AEROSPACE CONFERENCE PROCEEDINGS, 2000 IEEE MARCH 18-25, 2000, PISCATAWAY, NJ, USA,IEEE, vol. 2, 18 March 2000 (2000-03-18), pages 43-48, XP010516696, ISBN: 978-0-7803-5846-1

EP 2 517 080 B1

**Description**

BACKGROUND

This invention generally relates to systems and methods for indicating a minimum safe flight speed to a pilot of a multi-engine aircraft following an engine failure. This invention also generally relates to systems and methods for providing flight path guidance and autopilot commands to maintain a safe airspeed of a multi-engine aircraft following an engine failure.

Methods for calculating and using a minimum speed are e.g. disclosed in US 4967363 A, FR 2 542 276 A or US 2001/032039 A1.

It is known in the art to detect a thrust asymmetry due to engine failure in a multi-engine airplane and then illuminate a cockpit warning light. A warning light that indicates an engine failure does not provide any information about what airspeed to fly in order to maintain directional control. Given adequate timeliness of pilot reaction to an engine failure, the pilot then needs to know what airspeed to fly and what airspeeds to avoid.

The problem to be solved is the lack of pilot indication or warning, for certain airplane types and designs, of the minimum speed that provides acceptable airplane control with a thrust asymmetry. For airplanes that have no cockpit warnings of minimum controllability speed, an inattentive or distracted pilot can let airspeed drop and the airplane can depart controlled flight prior to the pilot receiving a warning of the hazard.

Some lightweight, multi-engine airplanes certified to FAR and CS Part 23 are required by Sec. 23.1545 of FAA Regulations to show the certified minimum control speed $v_{mc}$ with one engine inoperative as a red radial line on the airspeed indicator. $V_{mc}$ is defined in Sec. 25.149 as "the calibrated airspeed at which, when the critical engine is suddenly made inoperative, it is possible to maintain control of the airplane with that engine still inoperative and maintain straight flight with an angle of bank of not more than 5 degrees."

Although transport airplane regulations (FAR and CS Part 25 for Weight > 12,500 lb) require operating speeds to have specific margin to engine-out minimum control speeds, few, if any, large multi-engine airplanes have cockpit indications or pilot warnings of a minimum airspeed that retains a minimum level of lateral and directional control.

Some airplanes have sufficient directional control such that engine-out minimum control speeds are below the minimum flight speed limited by wing lift. For these airplanes, the common cockpit indications of stall speed and the common stall warning systems provide sufficient minimum speed awareness for engine out conditions.

However, some airplanes have minimum operating speeds that are determined by lateral or directional control with an engine failed. It is these airplanes that can benefit from a unique minimum speed display and warning that is based on lateral or directional control capabilities.

Existing solutions are the fixed marking on airspeed indicators or control surfaces sized large enough to put the minimum control speed below the minimum stall warning speed. Some airplanes have neither of these solutions and rely on airmanship to not fly too slow or to recognize the correlation of directional control usage with airspeed, or rely on pilot memory of a minimum control airspeed calculated for a specific condition.

A fixed number for minimum airspeed is, by definition, calculated for only one set of conditions(flaps, altitude, selected thrust derate). It is usually calculated for a worst case combination of flap and altitude. Since maximum thrust decreases at higher altitude, a sea level calculation is overly restrictive for higher altitudes. Also, for airplanes with engine derate capability, the minimum airspeed depends on the selected derate for a given takeoff. A fixed minimum airspeed will the overly restrictive when operating with engine derates.

Airplanes that have control surfaces sized to put the minimum control speed below the minimum stall warning speed for all weight and thrust combinations, pay a large weight and drag penalty to design for the ability to control maximum thrust at the stall speed of an empty airplane. For long-range airplanes that carry very large fuel loads, maximum thrust is needed for full fuel and payload and is rarely used during flight at low fuel and light payload.

There is a need for a method of calculating a minimum safe airspeed of a multi-engine aircraft following an engine failure based on the current magnitude of the thrust asymmetry.

BRIEF SUMMARY

One aspect of the invention is a system and a method for calculating and then displaying a minimum safe flight speed for an aircraft to maintain control under conditions of thrust asymmetry. Another aspect of the invention is a system and a method for calculating a minimum safe flight speed for an aircraft to maintain control with thrust asymmetry and providing flight path guidance and autopilot commands to maintain airspeed above this calculated minimum speed as defined in claims 1 and 5.

Each of the embodiments disclosed herein helps a pilot of a multi-engine aircraft, following failure of an engine, to avoid flying at an unsafe airspeed in cases where lateral or directional control is insufficient for the given thrust asymmetry. The calculation of a minimum speed that is based on the current thrust asymmetry or current thrust capability has the advantage over a fixed speed of not imposing a warning at a speed that is too conservative for the conditions and would interfere with acceptable operating speeds.

The preferred embodiments are implemented in the software of an aircraft's flight control and display computers. The software of the flight control computer calculates the minimum safe speed (hereinafter "$V_{WARNING}$") in the presence of thrust asymmetry using data from existing aircraft sensors that is available for other reasons. The flight control computer outputs the calculation results to the display computer, which controls the cockpit display so that it visually indicates the warning speed $V_{WARMNG}$ to the pilot. The calculation of a minimum safe flight speed for an aircraft to maintain control with thrust asymmetry enables awareness, warning and guidance. It puts pilot attention on airspeed, which is the second most important parameter for engine-out control after the rudder angular position.

Other aspects of the invention are disclosed and claimed below.

BRIEF DESCRIPTION OF THE DRAWINGS

FIG. 1 is a high-level block diagram showing components of an aircraft control system that can be programmed to provide the novel functionality disclosed herein.

FIG. 2 is a drawing showing an airspeed display in accordance with one embodiment of the invention.

FIG. 3 is a drawing showing the angle of attack of an airplane body.

FIG. 4 is a block diagram showing autoflight use of a warning speed for thrust asymmetry control as a factor in setting a minimum guidance and control speed.

FIG. 5 is a block diagram showing one method for calculating and displaying a warning speed for thrust asymmetry control.

FIG. 6 is a block diagram showing another method for calculating and displaying a warning speed for thrust asymmetry control.

Reference will hereinafter be made to the drawings in which similar elements in different drawings bear the same reference numerals.

DETAILED DESCRIPTION

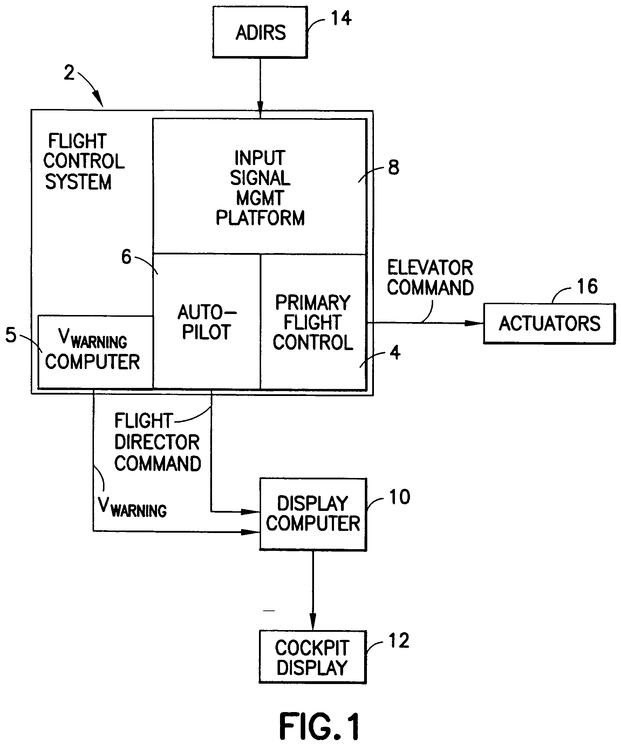

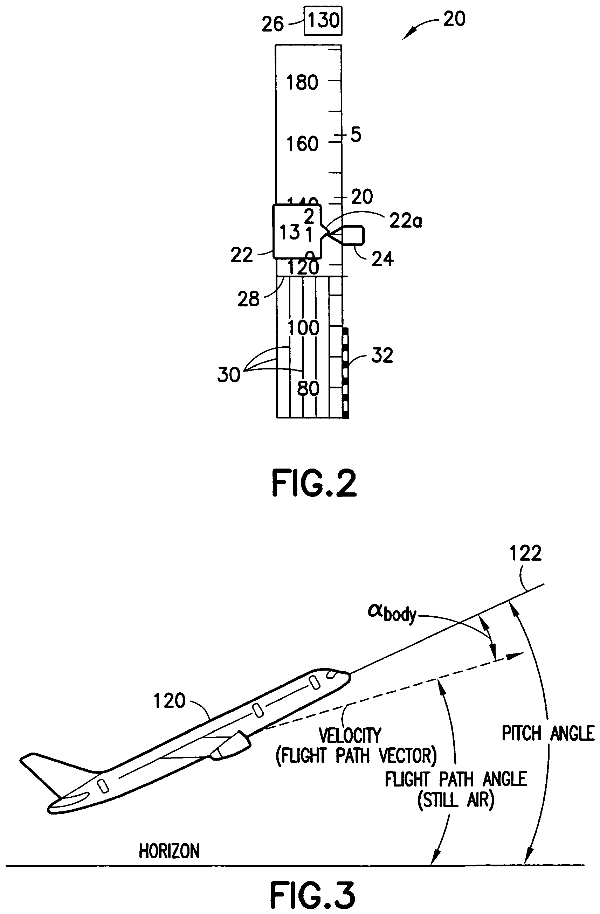

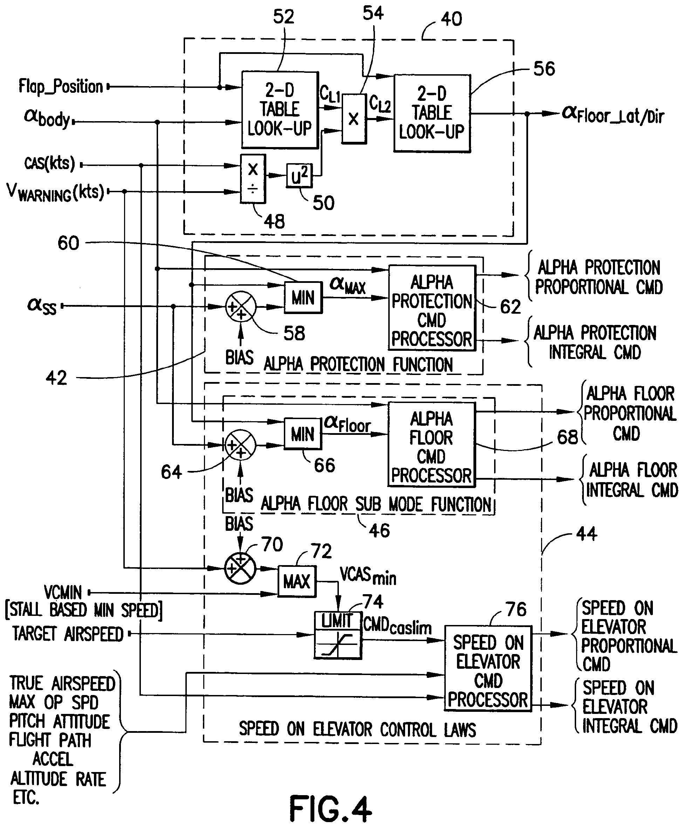

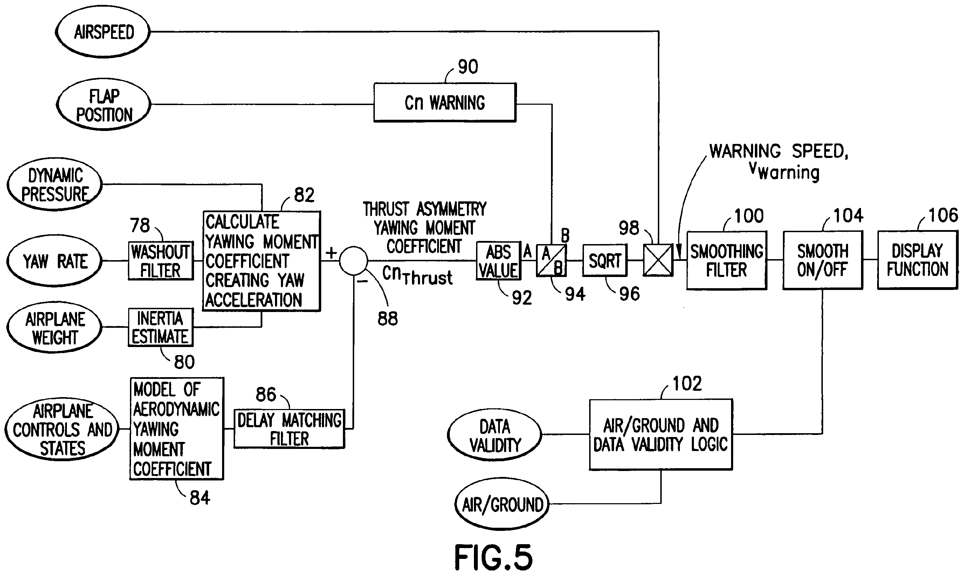

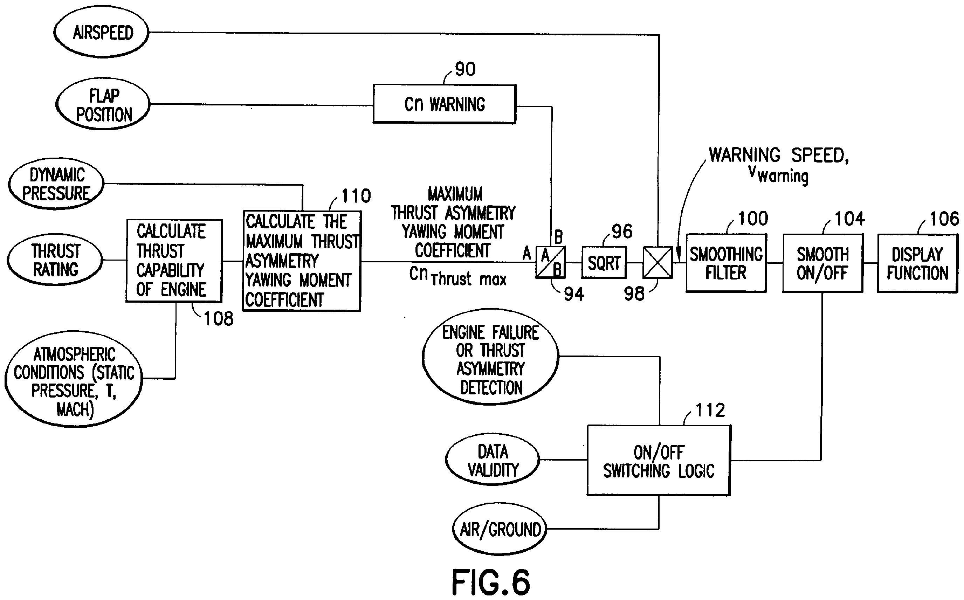

FIG. 1 is a block diagram showing hardware components of a control system of a type which already exists on modern airplanes. The air-data system and inertial reference system (ADIRS) 14 comprises an air data part that provides airspeed, angle of attack, temperature and barometric altitude data, while the inertial reference part gives attitude, flight path vector, ground speed and positional data to an input signal management platform 8 of a flight control system 2. The flight control system 2 comprises a primary flight control computer/function 4 and an auto-pilot computer/function 6. The primary flight control computer 4 and auto-pilot computer 6 could have independent input signal management platforms. The flight control system 2 further comprises a warning speed computer/function 5 that computes the warning speed $V_{WARNING}$ based on information acquired by the ADIRS 14 and other information that will be described in detail later herein with reference to FIGS. 5 and 6. [The warning speed computer could alternatively be incorporated in either the autopilot computer or the primary flight computer.] The warning speed computer 5 sends the calculation result to a display computer 10 that controls a cockpit display 12 to display that warning speed, as will be described below in more detail with reference to FIG. 2. The warning speed computer 5 also sends the calculation result to the autopilot computer 6, which uses the warning speed $V_{WARNING}$ and other information to generate various autoflight commands (as will be described below in more detail with reference to FIG. 4) that are sent to the primary flight control computer 4. When the autopilot is engaged, the primary flight control computer 4 outputs an elevator command to the elevator actuators 16 based at least partly on those commands from the autopilot computer 6. Alternatively, the autopilot computer 6 could generate the required elevator command independent from the primary flight control computer 4. The elevator command is determined based on the desired angular setting of the elevators (not shown). The elevators are used to perform pitching maneuvers and also serve to adjust the aircraft's attitude with respect to the ground for takeoff and landing. When the flight director is engaged, the auto-pilot computer 6 provides a flight director pitch attitude guidance cue.

In accordance with one embodiment, the cockpit display includes a visual indication of the calculated warning speed $V_{WARNING}$ sent by the primary flight control computer 4 to the display computer 10. The warning speed $V_{WARNING}$

is displayed on a speed tape in a manner that provides a clear, unambiguous indication of a minimum safe speed that is clearly distinguishable from other symbols displayed on modem cockpit displays. FIG. 2 shows a speed tape display 20 comprising a system of ordered marks at fixed intervals along a vertical axis, each interval representing 10 knots. The current speed is indicated by the number (in this example, 131 knots) displayed inside a graphical symbol 22. The graphical symbol 22 is fixed and the vertical scale of the speed tape moves vertically behind symbol 22 as the current speed changes. In addition, the number displayed inside the symbol 22 will change as the current speed changes. The pointer 22a on the right-hand side of the graphical symbol 22 will point at the position along the vertical scale that corresponds to the current speed indicated by the number displayed inside the graphical symbol 22. The pointer 24 indicates a target airspeed selected by the flight crew on the mode control panel (the flight deck interface between the flight crew and the autoflight system), while the graphical symbol 26 located above the speed tape display 20 contains a numerical indicator of that same pilot-selected target speed (in this example, the target speed has been set to 130 knots).

In accordance with one embodiment of the invention, a visual indicator of the warning speed $V_{WARNING}$ is displayed as a horizontal line, indicating by reference numeral 28 in FIG. 2. The vertical lines 30 extending downward from horizontal line 28 indicate the range of aircraft speeds lower than the warning speed $V_{WARNING}$. In an actual implementation, the horizontal line 28 and the five mutually parallel vertical lines 30 are preferably all displayed in a bright red color.

In addition, the speed tape display 20 depicted in FIG. 2 includes a visual indication of the stick shaker speed, i.e., a speed at which wing stall is near. In the display seen in FIG. 2, the top of the relatively thicker vertical bar 32 indicates the stick shaker speed at which wing lift stall is near. The vertical bar is preferably implemented as a series of bar segments of equal length that alternate in color from black to red.

The speed tape display 20 shown in FIG. 2 can be incorporated in an otherwise typical cockpit display. The other graphical elements of such a typical cockpit display are known in the art and not shown in FIG. 2.

In addition to the visual indicator 28, preferably a cockpit aural warning is sounded when aircraft airspeed drops below the calculated minimum safe speed $V_{WARNING}$ for the current thrust asymmetry. The preferred implementation is a voice warning "AIRSPEED, AIRSPEED" that focuses the pilot on restoring airspeed to one greater than the displayed warning speed.

In accordance with a further embodiment, the calculated warning speed $V_{WARNING}$ is used for autoflight guidance and control so that the autopilot system will not guide the pilot or control the airplane to a low airspeed that is below the calculated minimum safe speed for the current thrust asymmetry when it would otherwise be safe to do so if there were no thrust asymmetry.

FIG. 3 is a drawing showing the angle of attack of an airplane body 120. The dashed line denotes the flight path vector, which also indicates the direction of oncoming air assuming still air conditions (i.e., no wind). The direction of the flight path vector is indicated by the flight path angle relative to the horizon. Reference line 122 indicates the longitudinal axis or centerline of the fuselage. The angle indicated by the notation $\alpha_{body}$ is the airplane body angle of attack, which is the angle between the oncoming air and the fuselage centerline 122. The pitch angle (also called "pitch attitude" hereinafter) is the angular displacement of the fuselage centerline 122 about an axis parallel to the lateral axis of the airplane. The body angle of attack $\alpha_{body}$ is measured by AOA vanes (or sensors) mounted on the nose of the airplane and is converted to equivalent body AOA as explained hereinafter. The body angle of attack $\alpha_{body}$, along with the calculated warning speed $V_{WARNING}$, the pitch attitude and other parameters, are used to determine the elevator command as described below with reference to FIG. 4.

In accordance with one embodiment of the invention, the portions of an autopilot that provide flight path guidance and autopilot commands during thrust asymmetry are shown in FIG. 4. FIG. 4 includes the basic elements of a Proportional Integral Control (PIC) scheme as is commonly used in the art of auto-pilot design. A PIC is a feedback control scheme where a weighted sum of error signal (e.g., the difference between the airspeed and the desired target airspeed) and the integral of the error signal are used to drive the 'plant'. To facilitate understanding, the various elements depicted in FIG. 4 have been grouped into functional blocks indicated by dashed rectangles. The functional block 40 is new, as is the use of its output and the calculated warning speed $V_{WARNING}$ by the functional blocks 42, 44 and 46.

The information provided on FIG. 4 is very top level, and no attempt has been made to include all of the inputs and outputs. Rather, FIG. 4 shows how the existing stall-based envelope protection scheme has been modified to prevent automatic control or guidance to airspeed below the calculated warning speed $V_{WARNING}$.

As seen in FIG. 4, the functional block 40 receives the following inputs: $\alpha_{body}$ - the body angle of attack (in degrees); the calculated warning speed $V_{WARNING}$ (in knots); Flap_Position - current flap position (in degrees), based on the position of the trailing edge flap angle and the leading edge slat position; and CAS (calibrated airspeed) - airspeed (in knots) corrected for instrument error and position error. Pitot probes and static pressure ports mounted on the aircraft body are used to determine CAS. The inputs Flap_Position and $\alpha_{body}$ to a two-dimensional look-up table 52 determine the output $C_{L1}$, which is the coefficient of lift for the current airspeed [unitless]. The inputs CAS and $V_{WARNING}$ are multiplied in block 48 and the resulting product is then squared in block 50. The outputs of block 50 and look-up table 52 are multiplied in block 54, the resulting product being $C_{L2}$, which is the projected coefficient of lift [unitless] for the warning speed $V_{WARNING}$. The parameters $C_{L2}$ and Flap_Position are then inputted to another two-dimensional look-up table 56, which inputs determine the output $\alpha_{floor\_Lat/Dir}$ (lateral/directional alpha floor), which is the equivalent angle of attack (in degrees) for the warning speed $V_{WARNING}$. As seen in FIG. 4, the equivalent angle of attack $\alpha_{Floor\_Lat/Dir}$ is outputted by functional block 40 to an alpha protection functional block 42 and to an alpha floor sub-mode functional block 46, the latter being part of the speed on elevator control laws functional block 44.

As seen in FIG. 4, the alpha protection functional block 42 receives the following inputs: $\alpha_{body}$; $\alpha_{Floor\_Lat/Dir}$; and $\alpha_{SS}$ (stick shaker angle of attack in degrees), which is the body angle of attack at which stick shaker occurs. [Stick shaker is an indication (tactile, aural and visual cues) to the flight crew that the airplane is near stall.] The stick shaker angle of attack $\alpha_{SS}$ and a bias are summed in a summing junction 58. Then the equivalent angle of attack $\alpha_{Floor\_Lat/Dir}$ and the output of the summing junction 58 are inputted to MIN select block 60, which outputs a parameter $\alpha_{Max}$, which is the target (desired) angle of attack (in degrees) used by the alpha protection function. The function of MIN select block 60 is to pass the lesser of the two inputs. The parameters $\alpha_{Max}$ and $\alpha_{body}$ are inputted to an alpha protection command processor 62. The alpha protection command processor 62 outputs two commands: an alpha protection proportional command and an alpha protection integral command. The alpha protection proportional command is proportional to the alpha protection error signal, which is the difference between $\alpha_{Max}$ and $\alpha_{body}$ (in degrees). The alpha protection integral command is the integral of the alpha protection error signal (in deg/sec).

For autoflight modes that are not speed on elevator modes (Altitude Hold, Altitude Capture, Vertical Speed, Vertical Navigation and Glideslope), speed control is provided by the engine thrust control (autothrottle or manual throttle control). Note that FIG. 3 does not include any reference to these modes. As part of the envelope protection scheme, the alpha protection function is in place to prevent the airplane from flying too slow when there is insufficient thrust. When the angle of attack increases beyond $\alpha_{Max}$, the autopilot will switch from its current engaged mode to an alpha control mode where the autopilot actively controls to a safe angle of attack.

Still referring to FIG. 4, the autoflight speed on elevator control laws (represented by functional block 44), used for climbing and descending maneuvers, provide precise speed control to a target airspeed by pitching the airplane. Pitch attitude change is provided by moving the elevator control surface (hence the name speed on elevator or speed through elevator). When the autopilot is engaged, control of the elevator is automatic. If the pilot is manually flying the airplane, the pitch guidance is provided to the pilots via the flight director pitch guidance. Speed on elevator modes include: Flight Level Change, Take-off and Go-around. For Take-off and Go-around modes, the speed on elevator control laws have provisions to improve performance in windshear. Below a specified climb rate, the autopilot controls to a theta reference command, rather than pitching down to maintain airspeed in a decreasing headwind shear. The theta reference command is a pitch attitude target for take-off and go-around conditions. This pitch attitude is referred to as a "reference" pitch attitude as it is the initial pitch target for the airplane during a take-off or go-around maneuver. By rotating the nose of the aircraft to the "theta reference" pitch attitude during a take-off or go-around maneuver, the aircraft will generate the required lift to be climbing out (gaining altitude) at the desired target airspeed. In the event of a decreasing headwind shear, there is a loss of lift and airspeed. Rather than pitching the aircraft nose-down to recover the speed, it is more desirable to "park" the pitch attitude of the airplane at the theta reference target until the adverse condition (the wind shear) has diminished to a point where there is sufficient energy to climb out and precisely control airspeed.

As seen in FIG. 4, the functional block 44 receives the following inputs: the calculated warning speed $V_{WARNING}$; VCMIN - a stall-based minimum speed (in knots) for flight operations (typically, VCMIN is typically 130% of the stall speed); Target Airspeed - the desired airspeed target, either the pilot selected airspeed (previously described with reference to FIG. 3) or an internal target based on the airspeed at liftoff or go-around engagement; True Airspeed - the calibrated airspeed corrected for temperature and density; Max Op Speed - the maximum operational speed; Pitch Attitude - the aircraft's pitch angle; Flight Path Accel - the acceleration along the flight path; and Altitude Rate - the rate of climb (or descent). The calculated warning speed $V_{WARNING}$ and a bias are summed in a summing junction 70. Then the stall-based minimum speed VCMIN and the output of the summing junction 70 are inputted to MAX select block 72, which outputs a parameter $VCAS_{min}$, which is the minimum speed floor used in the speed on elevator control laws. The function of MAX select block 72 is to pass the greater of the two inputs. The Target Speed is inputted to a limiter block 74, which also receives $VCAS_{min}$ from block 72 and applies it as a lower limit on the Target Speed. If the Target Speed is less than the limit $VCAS_{min}$, then the output $CMD_{CASlim}$ (speed on elevator command limited) would be limited to $VCAS_{min}$. Otherwise $CMD_{CASlim}$ is the Target Speed. The parameters $CMD_{CASlim}$, CAS, True Airspeed, Max Op Spd, Pitch Attitude, Flight Path Accel, Altitude Rate, etc. are inputted to a speed on elevator command processor 76. The speed on elevator command processor 76 outputs two commands: a speed on elevator proportional command and a speed on elevator integral command. The speed on elevator proportional command is proportional to the speed on elevator error signal, which is the difference between True Airspeed and Target Airspeed (i.e., $CMD_{CASlim}$) (in degrees). The speed on elevator integral command is the integral of the speed on elevator error signal (in deg/sec).

The functional block 44 also comprises an alpha floor sub-mode functional block 46, which prevents the autoflight system from controlling to (autopilot engaged) or providing guidance to (flight director) an unsafe angle of attack during take-off and go-around operations. The autoflight system switches to the alpha floor sub-mode whenever the alpha floor command is more nose down than the theta reference command. The theta reference command refers to the autopilot's command to the pitch attitude reference mentioned above.

As seen in FIG. 4, the alpha floor sub-mode functional block 46 receives the following inputs: $\alpha_{body}$; $\alpha_{Floor\_Lat/VDir}$; and $\alpha_{SS}$. The stick shaker angle of attack $\alpha_{SS}$ and a bias are summed in a summing junction 64. Then the equivalent angle of attack $\alpha_{Floor\_Lat/Dir}$ and the output of the summing junction 64 are inputted to MIN block 66, which outputs a parameter $\alpha_{Floor}$, which is the target (desired) angle of attack (in degrees) used by the alpha floor sub-mode function. The parameters $\alpha_{Floor}$ and $\alpha_{body}$ are inputted to an alpha floor command processor 68. The alpha floor command processor 68 outputs two commands: an alpha floor proportional command and an alpha floor integral command. The alpha floor proportional command is proportional to the alpha floor error signal, which is the difference between $\alpha_{Floor}$ and $\alpha_{body}$ (in degrees). The alpha floor integral command is the integral of the alpha floor error signal (in deg/sec).

FIG. 4 includes three command processors 62, 68 and 76. Each command processor produces proportional and integral commands. These commands are "outer loop" commands. As mentioned above, FIG. 4 does not include all of the outer loop commands, but rather only those modified to make use of the calculated warning speed information ($V_{WARNING}$). The outer loop proportional commands are also processed further to generate the flight director guidance pitch cue. When the autopilot is engaged, the outer loop commands are processed downstream by the Pitch Inner Loop (which may reside on the autopilot computer or on the primary flight computer) to produce the required elevator command to achieve the desired result (e.g., controlling to the target airspeed or target angle of attack).. In other words, the autopilot commands the elevator to move in a manner to achieve the target airspeed or if the airspeed is too slow, the elevator commanded by the autopilot controls the airplane to a minimum speed or to a safe angle of attack.

A method for calculating a minimum safe airspeed ($V_{WARNING}$) with a thrust asymmetry that corresponds to the current magnitude of the thrust asymmetry based on lateral and directional control capabilities will now be described with reference to FIG. 5. This method provides a real-time calculation that enables the display to show the current minimum safe speed as the thrust asymmetry changes and avoids speed restrictions or warnings where they are not needed and provides awareness of the current margin of remaining control power. For example, as the operating engine(s) at high thrust is(are) throttled back to lower thrust, the pilot will see that the minimum speed will decrease on the display, showing that the airplane is further from its lateral and directional control limits. The disclosed calculations are performed by the primary flight control computer, which sends the calculated warning speed to the display computer and to the autopilot.

Referring to FIG. 5, block 82 calculates the yawing moment coefficient creating yaw acceleration. This block converts measured yaw acceleration into the total airplane yawing moment coefficient. To do this, two generally known equations are used. The first relates yaw acceleration $\dot{r}$ to total airplane yawing moment N and airplane yaw moment of inertia $I_{ZZ}$:

$$\dot{r} = N \cdot I_{zz}$$

Yaw acceleration is approximated by passing the measured airplane yaw rate through a washout filter 78 and additional filtering to reduce signal noise. Airplane yaw moment of inertia may be approximated as being a function of airplane weight in block 80. Airplane weight is a quantity that may be obtained as a signal from existing airplane systems. From this information, total airplane yawing moment $N$ can be calculated.

The second equation converts dimensional yawing moment into a yawing moment coefficient:

$$C_n = \frac{N}{\overline{q} \cdot S \cdot b}$$

where dynamic pressure $\overline{q}$ is known from airplane air data systems and the values of wing area $S$ and wing span $b$ are known constants for the airplane. This calculates the total airplane yawing moment coefficient. It is the sum of all yawing moments acting on the airplane including that from aerodynamics and propulsion systems.

Still referring to FIG. 5, the aerodynamic yawing moment coefficient is modeled in block 84. This block estimates the component of total airplane yawing moment coefficient that is generated by aerodynamic forces. This may includes contributions such as yawing moment due to rudder deflection, airplane sideslip angle, airplane angular rates (roll rate, yaw rate), and lateral control deflection. It is common practice in the industry to generate and use models of airplane aerodynamic forces and moments across the flight envelope and range of configurations of the airplane. Block 84 implements such a model for the aerodynamic yawing moment coefficient. This model may be simplified and tailored to the flight conditions and airplane configurations for which the airplane could be flying near its control limitations with a thrust asymmetry.

The Aero model $C_n$ output by block 84 is processed through a simple delay matching filter 86 so that the output signal has the same total time delay as the total airplane yawing moment coefficient calculated from yaw acceleration. This filter is used on this signal when the total time delay of the input signals and computation are less than the time delays of the input signals, filtering and calculation of the total airplane yawing moment coefficient signal.

The thrust asymmetry yawing moment coefficient can then be calculated by subtracting the aerodynamic effects from the total airplane yawing moment in junction 88. This calculation uses the assumption that the airplane engines and the modeled aerodynamics are the only sources of total airplane yawing moment. Another significant contributor is the effect of forces on the landing gear while the airplane is on the ground. Since this system is not intended to operate on the ground, and logic is included to prevent display of a warning speed on the ground, the gear force contribution can be ignored. The simplified equation for total airplane yawing moment and the equation for the thrust asymmetry yawing moment coefficient are as follows:

$$N_{total} = N_{Aero} + N_{Thrust}$$

$$C_{n_{Thrust}} = C_{n_{Total}} - C_{n_{Aero}}$$

As shown in FIG. 5, the thrust asymmetry yawing moment coefficient is then subject to an absolute value function 92 to remove the directional information but retain the magnitude. This serves to allow all later computations to produce the same output whether the thrust asymmetry tends to yaw the airplane to the left or to the right.

The next step is to use current airspeed and a $C_n$ value for the warning to compute a warning airspeed $V_{WARNING}$. As is typical in the design and analysis of multi-engine airplanes, the capability to control a thrust asymmetry can be expressed in terms of a thrust asymmetry yawing moment coefficient. A single value of yawing moment coefficient can be chosen to represent a certain degree of airplane control for a given airplane configuration. Using this non-dimensional parameter allows the quick calculation of the airspeed that will provide that same degree of airplane control for a range of thrust asymmetries which can vary with altitude, temperature and selected thrust limit. In a similar way, a $C_n$ value is chosen to correspond to the degree of airplane control at which the thrust asymmetry warning is desired. FIG. 5 shows this $C_n$ value (block 90) as being a function of the airplane flap position but it could be implemented as a constant or a function of more or different parameters.

The current calculated value of the thrust asymmetry yawing moment coefficient is used to calculate the thrust asymmetry warning speed using the following equation:

$$V_{Warning} = V_{current} \cdot \sqrt{\frac{C_{n_{Thrust}}}{C_{n_{Warning}}}}$$

This equation is implemented by means of a divider 94, a square root function block 94 and a multiplier 98. The output of multiplier may be sent to a smoothing filter 100 to reduce noise in the signal.

The thrust asymmetry warning speed display 106 may need to be removed or disabled for a variety of reasons such as when the airplane is on the ground and when any of the parameters used in the calculation are known to be invalid. For these cases, any of a number of standard methods may be used to smoothly transition an output signal from the input value to a default value over a desired amount of time. One method is to use transition logic that ramps the output signal between zero and the input value over 1 second when the state of the engagement signal changes between TRUE and FALSE. This method is performed by the "smooth on-off' block 104 seen in FIG. 5. The result of all these computations is the thrust asymmetry warning speed $V_{WARNING}$ that is provided to the airplane display function 106.

FIG. 6 is a flowchart showing a variation of the method depicted in FIG. 5. This variation is a simplification where the minimum safe airspeed is calculated based on the maximum possible thrust asymmetry given the engine thrust capability at the current flight condition regardless of the actual thrust asymmetry. The minimum speed could be displayed all the time or only when a threshold level of thrust asymmetry is detected.

More specifically, FIG. 6 shows a different method for calculating the thrust asymmetry yawing moment coefficient. First, block 108 calculates the thrust capability of the engine. This process contains a model of the maximum thrust capability of the engine. This may be implemented using as many input signals as are needed and available to model the thrust capability to the desired accuracy. This type of calculation is familiar to those practiced in the art of airplane propulsion systems.

Then block 110 calculates the maximum thrust asymmetry yawing moment coefficient. Converting maximum thrust to maximum thrust asymmetry yawing moment coefficient may be done with the following equation for twin engine airplanes with symmetrically positioned engines on the left and right side of the airplane:

$$C_{n_{Thrust_{\max}}} = (Thrust_{\max} - Thrust_{failed\_engine}) \cdot \left( y_{engine} \middle/ \overline{q} \cdot S \cdot b \right)$$

where the thrust of a failed engine $Thrust_{failed\_engine}$ is approximated as a constant or estimated with typical methods; the engine lateral distance from the airplane centerline $y_{engine}$ is a known constant; dynamic pressure $\overline{q}$ is known from airplane air data systems; and the values of wing area $S$ and wing span $b$ are known constants for the airplane. For an airplane with a different number of engines or different engine locations, this equation can be easily be adapted by those practiced in the art of airplane design.

The next several calculation steps are identical to those in method depicted in FIG. 5. A difference comes in the on/off switching logic 112. In this function, a signal that indicates an engine failure or a thrust asymmetry condition may be used as additional criteria to determine if the calculated $V_{warning}$ will be displayed on the cockpit instrumentation. This allows the warning speed to be displayed only in cases of a large thrust asymmetry. There are a number of methods that are generally known to detect an engine failure or a large thrust asymmetry.

These disclosed embodiments are implemented in the software of the flight control and display computers using existing airplane sensors whose data are available in the flight control computer for other reasons. The invention provides awareness, warning and guidance. It puts pilot attention on airspeed which is the second most important parameter for engine out control after the rudder. The invention provides the solution to having a pilot warning prior to reaching the minimum speed for airplane control with asymmetric thrust. With this system in place, it is possible to reduce the vertical tail size and achieve significant weight and drag reductions rather than use the existing solution of a larger vertical tail that allows the minimum control speed to be below stall warning speed.

A fixed minimum speed display would not be workable for an aircraft that has high-thrust engines that can be operated at significantly reduced thrust for takeoff (such as a 30% to 40% reduction) in order to allow takeoff from shorter runways due to the ability to control engine out flight at lower speeds. A fixed speed based on the highest rating would make reduced thrust operation have very little value and would be a significant loss of operational capability compared to other commercial transport airplanes.

While the invention has been described with reference to various embodiments, it will be understood by those skilled in the art that various changes may be made and equivalents may be substituted for elements thereof without departing from the scope of the invention as defined in the claims.

**Claims**

1.  A method of controlling the pitch attitude of a multi-engine aircraft experiencing thrust asymmetry, comprising the following steps:

    calculating in real-time a minimum safe speed ($V_{warning}$) of said multi-engine aircraft (120) experiencing thrust asymmetry comprising calculating a thrust asymmetry yawing moment coefficient as a function of at least the following parameters: dynamic pressure, yaw rate and airplane weight; and
    outputting a control command to an elevator actuator (16) for setting the angular position of an elevator of said aircraft (120), said angular position setting being selected so that the current airspeed of said aircraft stays above said calculated minimum safe speed ($V_{warning}$).

2.  The method as recited in claim 1, wherein said step of calculating a minimum safe speed ($V_{warning}$) comprises the step of calculating a thrust capability of an engine of said aircraft and calculating a maximum thrust asymmetry yawing moment coefficient.

3.  The method as recited in claim 1, further comprising the step of displaying said minimum safe speed on a cockpit display (12) of said aircraft.

4.  The method as recited in claim 3, further comprising the step of disabling the display of said minimum safe speed on said cockpit display (12) of said aircraft when said aircraft is on the ground.

5.  A system for a multi-engine aircraft, comprising a flight control computer system (2) and an elevator actuator (12), said computer system (2) being programmed to calculate in real-time a minimum safe speed ($V_{warning}$) of said multi-engine aircraft during thrust asymmetry and output a control command (16) to said elevator actuator that is a function of at least said calculated minimum safe speed, wherein said computer system (2) is programmed to calculate said minimum safe speed ($V_{warning}$) by calculating a thrust asymmetry yawing moment coefficient as a function of at least the following parameters: dynamic pressure, yaw rate and airplane weight.

6.  The system as recited in claim 5, wherein said computer system (2) is programmed to calculate said minimum safe speed ($V_{warning}$) by calculating a thrust capability of an engine of said aircraft and calculating a maximum thrust asymmetry yawing moment coefficient as a function of at least the following parameters: dynamic pressure and said calculated thrust capability.

7.  The system as recited in claim 5, further comprising a cockpit display (12) and a display computer (10) programmed to control said cockpit display to display an indicator representing said calculated minimum safe speed ($V_{warning}$).

**Patentansprüche**

1.  Verfahren zur Regelung der Nick-Lage eines mehrstrahligen Flugzeugs, das eine Schubasymmetrie erfährt, das die folgenden Schritte aufweist:

    Berechnen in Echtzeit einer minimalen Sicherheitsgeschwindigkeit ($V_{warning}$) des mehrstrahligen Flugzeugs (120), das eine Schubasymmetrie erfährt, mit Berechnen eines Schubasymmetrie-Giermoment-Koeffizienten als Funktion von zumindest den nachfolgenden Parametern: dynamischer Druck, Gierrate und Flugzeuggewicht; und
    Ausgabe eines Regelungsbefehls an einen Höhenruder-Aktuator (16), zur Einstellung der Winkelposition eines Höhenruders des Flugzeugs (120), wobei die Winkelpositionseinstellung ausgewählt wird, sodass die aktuelle Fluggeschwindigkeit des Flugzeugs über der kalkulierten minimalen Sicherheitsgeschwindigkeit ($V_{warning}$) bleibt.

2.  Verfahren nach Anspruch 1, wobei der Schritt der Berechnung einer minimalen Sicherheitsgeschwindigkeit ($V_{warning}$) ein Berechnen einer Schubfähigkeit eines Triebwerks des Flugzeugs und Berechnen eines maximalen Schubasymmetrie-Giermoment-Koeffizienten umfasst.

3.  Verfahren nach Anspruch 1, ferner mit Anzeigen der minimalen Sicherheitsgeschwindigkeit auf einem Cockpitdisplay (12) des Flugzeugs.

4.  Verfahren nach Anspruch 3, ferner mit Abschalten der Anzeige der minimalen Sicherheitsgeschwindigkeit auf dem Cockpitdisplay (12) des Flugzeugs, wenn das Flugzeug am Boden ist.

5.  System für ein mehrstrahliges Flugzeug, mit einem Flugregelungs-Computersystem (2) und einem Höhenruder-Aktuator (12), wobei das Computersystem (2) programmiert ist, in Echtzeit eine minimale Sicherheitsgeschwindigkeit ($V_{warning}$) des mehrstrahligen Flugzeugs während einer Schubasymmetrie zu berechnen und ein Regelungsbefehl (16) an den Höhenruder-Aktuator auszugeben, der eine Funktion von zumindest der berechneten minimalen Sicherheitsgeschwindigkeit ist, wobei das Computersystem (2) programmiert ist, um die minimale Sicherheitsgeschwindigkeit ($V_{warning}$) zu berechnen, in dem ein Schubasymmetrie-Giermoment-Koeffizient als Funktion von zumindest den nachfolgenden Parametern berechnet wird: dynamischer Druck, Gierrate und Flugzeuggewicht.

6.  System nach Anspruch 5, wobei das Computersystem (2) programmiert ist, die minimale Sicherheitsgeschwindigkeit ($V_{warning}$) zu berechnen, in dem eine Schubfähigkeit eines Triebwerks des Flugzeugs berechnet wird und ein maximaler Schubasymmetrie-Giermoment-Koeffizient als Funktion von zumindest den nachfolgenden Parametern berechnet wird: dynamischer Druck und berechnete Schubfähigkeit.

7.  System nach Anspruch 5, ferner mit einem Cockpitdisplay (12) und einem Displaycomputer (10), der programmiert ist, das Cockpitdisplay zu steuern, um einen Indikator anzuzeigen, der die kalkulierte minimale Sicherheitsgeschwindigkeit ($V_{warning}$) darstellt.

**Revendications**

1. Procédé de commande de l'assiette en tangage d'un aéronef à plusieurs moteurs subissant une poussée asymétrique, comprenant les étapes suivantes consistant à :

   calculer en temps réel une vitesse de sécurité minimale ($V_{avertissement}$) dudit aéronef à plusieurs moteurs (120) subissant une poussée asymétrique consistant à calculer un coefficient de moment de lacet en poussée asymétrique en fonction d'au moins les paramètres suivants : la pression dynamique, l'amplitude du mouvement de lacet et la poids de l'aéronef ; et
   transmettre une instruction de commande à un actionneur de gouverne de profondeur (16) pour déterminer la position angulaire d'une gouverne de profondeur dudit aéronef (120), ladite détermination de la position angulaire étant sélectionnée de telle sorte que la vitesse aérodynamique actuelle dudit aéronef reste supérieure à ladite vitesse de sécurité minimale calculée ($V_{avertissement}$).

2. Procédé selon la revendication 1, dans lequel ladite étape de calcul d'une vitesse de sécurité minimale ($V_{aveitssement}$) comprend l'étape consistant à calculer une capacité de poussée d'un moteur dudit aéronef et à calculer un coefficient de moment de lacet en poussée asymétrique maximal.

3. Procédé selon la revendication 1, comprenant en outre l'étape consistant à afficher ladite vitesse de sécurité minimale sur un dispositif d'affichage de poste de pilotage (12) dudit aéronef.

4. Procédé selon la revendication 3, comprenant en outre l'étape consistant à ne pas permettre l'affichage de ladite vitesse de sécurité minimale sur ledit dispositif d'affichage de poste de pilotage (12) dudit aéronef lorsque ledit aéronef est au sol.

5. Système pour un aéronef à plusieurs moteurs, comprenant un système informatique de commandes de vol (2) et un actionneur de gouverne de profondeur (12), ledit système informatique (2) étant programmé pour calculer en temps réel une vitesse de sécurité minimale ($V_{avertissement}$) dudit aéronef à plusieurs moteurs pendant une poussée asymétrique et transmettre une instruction de commande (16) au dit actionneur de gouverne de profondeur qui est fonction d'au moins ladite vitesse de sécurité minimale calculée, dans lequel ledit système informatique (2) est programmé pour calculer ladite vitesse de sécurité minimale ($V_{avertisssment}$) en calculant un coefficient de moment de lacet en poussée asymétrique en fonction d'au moins les paramètres suivants : la pression dynamique, l'amplitude du mouvement de lacet et le poids de l'aéronef.

6. Système selon la revendication 5, dans lequel ledit système informatique (2) est programmé pour calculer ladite vitesse de sécurité minimale ($V_{avertissement}$) en calculant une capacité de poussée d'un moteur dudit aéronef et calculer un coefficient de moment de lacet en poussée asymétrique maximal en fonction d'au moins les paramètres suivants : la pression dynamique et ladite capacité de poussée calculée.

7. Système selon la revendication 5, comprenant en outre un dispositif d'affichage de poste de pilotage (12) et un ordinateur de dispositif d'affichage (10) programmé pour commander ledit dispositif d'affichage de poste de pilotage de sorte à afficher un indicateur représentant ladite vitesse de sécurité minimale calculée ($V_{avertissement}$).

FIG.1

26 —[130]                    ↗ 20

180

160          — 5

140          — 20        ↗ 22a

22 —| 2 |
     |13 1|            ⌐ 24
     | 0 |

120

28

100

30                    32

80

## FIG.2

122

$\alpha_{body}$

120

VELOCITY
(FLIGHT PATH VECTOR)

PITCH ANGLE

FLIGHT PATH ANGLE
(STILL AIR)

HORIZON

## FIG.3

FIG.4

FIG.5

EP 2 517 080 B1

EP 2 517 080 B1

AIRSPEED

FLAP POSITION ──────── Cn WARNING /90

DYNAMIC PRESSURE

THRUST RATING ──── CALCULATE THRUST CAPABILITY OF ENGINE /108 ──── CALCULATE THE MAXIMUM THRUST ASYMMETRY YAWING MOMENT COEFFICIENT /110

MAXIMUM THRUST ASYMMETRY YAWING MOMENT COEFFICIENT

$Cn_{Thrust\ max}$

ATMOSPHERIC CONDITIONS (STATIC PRESSURE, T, MACH)

A/B /94 → SQRT /96 → /98 →

WARNING SPEED, $V_{warning}$

SMOOTHING FILTER /100 → SMOOTH ON/OFF /104 → DISPLAY FUNCTION /106

ENGINE FAILURE OR THRUST ASYMMETRY DETECTION

DATA VALIDITY ──── ON/OFF SWITCHING LOGIC /112

AIR/GROUND

FIG.6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4967363 A
- FR 2542276 A
- US 2001032039 A1